# FASCICULE DE BREVET EUROPEEN

(11) **EP 4 259 493 B1**
(45) Date de publication et mention de la délivrance du brevet: **02.10.2024**
(21) Numéro de dépôt: 21830959.9
(22) Date de dépôt: 01.12.2021
(51) Int. Cl.: B60T 1/00, F16D 59/00, F16D 55/02, F16D 121/20, F16D 121/24, F16D 127/06, F16D 55/36, F16D 129/08

(54) **ACTIONNEUR A FREIN DE PARKING INTEGRE**
AKTUATOR MIT INTEGRIERTER FESTSTELLBREMSE
ACTUATOR WITH INTEGRATED PARKING BRAKE

(30) Priorité: 10.12.2020 FR 2013009
(43) Date de publication de la demande: 18.10.2023
(73) Titulaire: Safran Landing Systems, 78140 Vélizy-Villacoublay (FR)
(72) Inventeur: RICHARD, Nathanael, 77550 Moissy-Cramayel (FR); PRESLE, Romain, 77550 Moissy-Cramayel (FR); SCHWARTZ, Laurent, 77550 Moissy-Cramayel (FR); GENGOUX, Mathieu, 77550 Moissy-Cramayel (FR)
(74) Mandataire: Cabinet Boettcher
(86) Numéro de dépôt international: PCT/EP2021/083830
(87) Numéro de publication internationale: WO 2022/122514

(56) Documents cités:
- EP-A1- 1 445 508
- EP-A2- 0 793 034
- DE-A1- 102011 086 149
- US-A1- 2014 000 992

## Description

### DOMAINE DE L'INVENTION

L'invention concerne le domaine du freinage des roues d'un aéronef.

### ARRIERE PLAN DE L'INVENTION

Il est connu d'assurer le freinage des roues d'un aéronef à l'aide d'un actionneur électromagnétique de freinage qui déplace un poussoir afin d'exercer un effort de presse sur une pile de disques comprenant des disques rotors solidaires en rotation de la roue et des disques stators solidaires en rotation de l'essieu sur lequel la roue est montée pour tourner. L'actionneur comprend généralement un moteur électrique pour mettre en rotation un arbre de sortie lié à un dispositif de conversion du mouvement de rotation de l'arbre de sortie en un mouvement de translation du poussoir.

Lorsque l'aéronef est en position de parking, il est nécessaire de maintenir l'effort de presse sur la pile de disques.

Il est également connu d'équiper l'actionneur électromagnétique de freinage d'un frein de parking à manque de courant qui bloque l'arbre du moteur de l'actionneur lorsque le moteur électrique n'est plus alimenté et qui le débloque dès que le moteur électrique est alimenté. Un tel frein de parking requiert une alimentation prolongée pendant l'utilisation de l'actionneur électromagnétique de freinage (à savoir, les phases d'atterrissage, de roulage et de décollage). Ceci augmente la consommation électrique globale du système de freinage et provoque un échauffement de la bobine du frein de parking. De plus, en cas de défaillance du frein de parking, celui-ci reste enclenché et applique l'effort de presse de manière permanente, ce qui conduit à une usure prématurée de la pile de disques en cas de roulage de l'aéronef frein bloqué et peut conduire à la ruine du système de freinage.

Des améliorations ont été apportées par le document FR-A-3018880.

Le document US 2014/000992 A1 décrit un dispositif de freinage à commande électrique pour un appareil de freinage à disque de type hydraulique monté dans une voiture.

### OBJET DE L'INVENTION

L'invention a pour objet d'améliorer encore les actionneurs de freinage, en particulier pour en réduire la consommation électrique et en améliorer la fiabilité.

### RESUME DE L'INVENTION

A cet effet, on prévoit un sous-ensemble moteur pour actionneur électromécanique de freinage d'une roue d'un aéronef. Le sous-ensemble moteur comporte un carter, un arbre monté dans le carter pour pivoter autour d'un axe longitudinal de l'arbre et un moteur électrique monté dans le carter et relié à une première extrémité de l'arbre pour entraîner l'arbre en rotation. L'arbre a une deuxième extrémité agencée pour être fonctionnellement reliée à un élément mobile d'un ensemble vis-écrou pour exercer un effort sur une pile de disques de freinage de la roue. L'arbre comprend une première denture et l'actionneur comprend une navette montée à coulissement relativement au carter et pourvue d'une deuxième denture pour coopérer avec la première denture. Le sous-ensemble moteur comporte également un mécanisme de sélection pour sélectivement déplacer la navette entre une première position dans laquelle la première denture est engagée avec la deuxième denture et une deuxième position dans laquelle la première denture est dégagée de la deuxième denture. L'actionneur comporte également un dispositif de maintien de la navette en sa première position et un dispositif de blocage permanent de la rotation de la navette relativement au carter.

Au sens de la présente demande, un dispositif de blocage permanent de la rotation de la navette signifie que celui-ci n'est pas débrayable.

On obtient ainsi un sous-ensemble moteur pour actionneur qui permet une immobilisation d'un poussoir de frein sans requérir d'énergie électrique pour rester dans cet état. Un tel sous-ensemble moteur pour actionneur peut être installé dans un environnement lubrifié, à l'inverse des dispositifs de freinage par friction, ce qui évite d'avoir à prévoir des compartiments étanches dans l'actionneur, améliorant les coûts de fabrication d'un tel actionneur.

On obtient un dispositif particulièrement économique lorsque la navette est montée sur l'arbre pour réaliser une liaison pivot glissant relativement à l'arbre. En effet, la réalisation d'une telle liaison est plus simple et économique que la réalisation d'une liaison glissière.

On réduit la masse de l'équipement lorsque le mécanisme de sélection comprend une bobine.

La fabrication du sous-ensemble moteur pour actionneur est simplifiée lorsque le dispositif de blocage permanent de la rotation de la navette relativement au carter comprend au moins un guide solidaire du carter et sur lequel la navette est guidée à coulissement selon une direction sensiblement parallèle à l'axe longitudinal.

La longévité du sous-ensemble moteur pour actionneur est améliorée lorsque la navette comprend une première portion en un matériau non ferromagnétique et une deuxième portion en un matériau ferromagnétique.

Avantageusement, le sous-ensemble moteur pour actionneur comprend également un dispositif de maintien de la navette en sa deuxième position.

Avantageusement, le dispositif de maintien pour maintenir la navette dans sa première position comprend un aimant permanent et/ou le dispositif de maintien pour maintenir la navette dans sa deuxième position comprend un aimant permanent.

On introduit une fonction de limiteur de couple lorsque la première denture et/ou la deuxième denture comprend une face comprise dans un premier plan sécant avec l'axe longitudinal, le premier angle entre le premier plan et l'axe longitudinal étant compris entre cinq et quatre-vingt-cinq degrés. On rappelle que, de manière connue, l'angle entre le premier plan et l'axe longitudinal correspond à l'angle (non orienté) que réalise l'axe longitudinal avec sa projection orthogonale sur le premier plan.

Avantageusement encore, le moteur électrique est implanté dans le carter entre la navette et la sortie de l'actionneur.

L'invention concerne également un actionneur comprenant un sous ensemble moteur du type précité, un système de freinage comprenant un tel actionneur et un aéronef comprenant un tel système de freinage.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux figures annexées, parmi lesquelles :
- la figure 1 est une vue schématique d'un système de freinage selon l'invention ;
- la figure 2 est une vue schématique en coupe d'un actionneur selon un premier mode de réalisation de l'invention dans un premier état ;
- la figure 3 est une vue schématique en coupe de selon un plan de coupe III-III de l'actionneur de la figure 2 ;
- la figure 4 est une vue schématique en coupe de l'actionneur de la figure 2 dans un deuxième état ;
- la figure 5 est une vue schématique en coupe de l'actionneur de la figure 2 dans un troisième état intermédiaire.
- la figure 6 est une vue schématique d'un actionneur selon un deuxième mode de réalisation de l'invention dans le premier état.

### DESCRIPTION DETAILLEE DE L'INVENTION

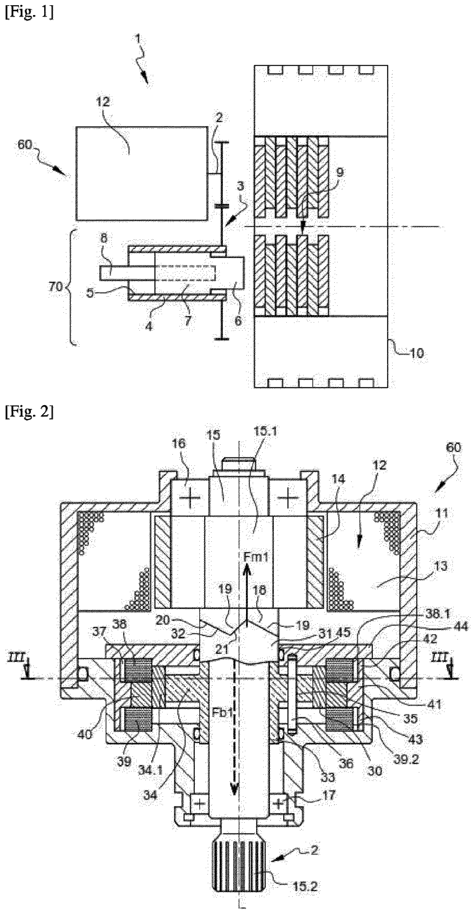

En référence aux figures 1 à 6, l'invention concerne un système de freinage d'une roue 10 d'un aéronef non représenté.

Le système de freinage comporte un actionneur électromécanique de freinage, généralement désigné 1, agencé pour exercer un effort de presse sur une pile de disques 9 comprenant des disques rotors solidaires en rotation de la roue et des disques stators solidaires en rotation de l'essieu (non visible ici) sur lequel la roue 10 est montée pour tourner.

L'actionneur électromécanique 1 comprend un sous-ensemble moteur 60 et un sous-ensemble actionneur de freinage 70. Le sous-ensemble moteur 60 comprend un moteur électrique 12 dont l'arbre de sortie 2 est relié au sous-ensemble actionneur de freinage 70 par un train d'engrenage 3. Le sous-ensemble actionneur de freinage 70 comprend un écrou 4, monté fixe en translation et libre en rotation pour être entraîné en rotation par le train d'engrenage 3. L'écrou 4 comporte un filetage 5. Un poussoir 6 est solidaire en translation d'une vis 7 à billes qui coopère avec le filetage 5. La vis 7 est équipé de moyens d'anti-rotation -ici un guide central 8- de manière à ce qu'une rotation de l'écrou 4 provoque un mouvement de translation de la vis 7 et donc du poussoir 6. Le poussoir 6 exerce ainsi sur commande un effort de presse sur la pile de disques 9. Cet agencement est connu en lui-même et ne sera pas plus décrit ici.

Comme visible en figure 2, le sous-ensemble moteur 60 comporte un carter 11 renfermant le moteur 12 électrique qui est relié à une unité électronique de contrôle de freinage non représentée comportant un circuit électronique de commande pilotant un circuit électronique de puissance alimentant le moteur 12. Le moteur 12 comprend un stator 13 fixé au carter 11 et un rotor 14 dont est solidaire une première extrémité 15.1 d'un arbre 15 monté à rotation dans le carter 11 autour d'un axe longitudinal Oy à l'aide d'un premier roulement 16 et d'un deuxième roulement 17. L'arbre 15 comprend une deuxième extrémité 15.2 qui s'étend en saillie à l'extérieur du carter 11 et qui est dentée pour constituer la sortie 2 du sous-ensemble moteur 60. L'arbre 15 est pourvu d'une première denture 18 à trois dents 19. Les dents 19 sont triangulaires et délimitées par des faces 20 et 21 respectivement comprises dans des plans qui ne contiennent pas l'axe longitudinal Oy (autrement dit des plans qui sécants de l'axe Oy) et qui ne sont pas perpendiculaires audit axe.

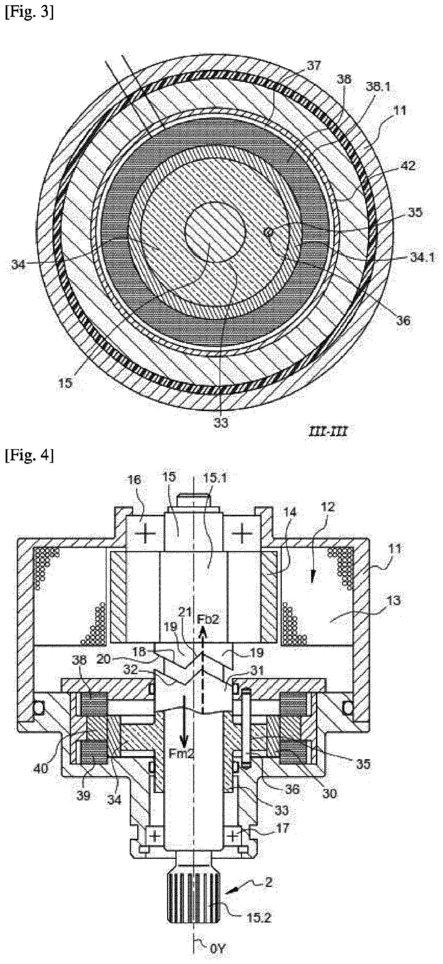

Une navette 30 est montée sur l'arbre 15 pour réaliser une liaison pivot glissant relativement à l'arbre 15 et une liaison glissière (autrement dit exclusivement coulissante) relativement au carter 11. La navette 30 est pourvue en sa première extrémité 31 d'une deuxième denture 32 apte à coopérer avec la première denture 18. Comme visible en figure 2, la navette 30 est implantée dans le carter 11 entre le moteur 12 et la sortie 2. Comme visible également en figure 3, la navette 30 comprend une première portion centrale 33 cylindrique tubulaire, en bronze, de laquelle vient en saillie radiale un plateau 34, lui aussi en bronze. La première portion centrale 33 est lisse et s'étend autour d'une portion lisse de l'arbre 15. Un anneau 34.1 en matériau ferromagnétique, ici de la ferrite, s'étend en périphérie du plateau 34. Le plateau 34 comprend un perçage 35 qui accueille un guide 36 en acier solidaire du carter 11 et sur lequel la navette 30 est guidée à coulissement selon une direction sensiblement parallèle à l'axe longitudinal Oy. Le guide 36 et le perçage 35 constituent un dispositif de blocage permanent de la rotation de la navette 30 relativement au carter 11. Le carter 11 définit un logement 37 qui accueille une première bobine 38, située côté moteur 12, et une deuxième bobine 39, située côté sortie 2, qui sont séparées l'une de l'autre par un aimant permanent 40. L'aimant permanent 40 est maintenu en place par un support 41 annulaire en matériau ferromagnétique qui comprend une première aile 42 et une deuxième aile 43. La première aile 42 s'étend face à un premier flanc externe 38.1 de la première bobine 38. La deuxième aile 43 s'étend face à un deuxième flanc externe 39.2 de la deuxième bobine 39. La première bobine 38 et la deuxième bobine 39 sont reliées électriquement à l'unité électronique de contrôle de freinage. Un couvercle 44 en matériau ferromagnétique pourvu d'une ouverture 45 de passage de l'arbre 15 ferme le logement 37.

La navette 30 peut adopter deux positions extrêmes, à savoir :
- une première position -représentée en figure 2- dans laquelle le plateau 34 est plus proche de la première bobine 38 et la première denture 18 est engagée avec la deuxième denture 32, et
- une deuxième position -représentée en figure 4- dans laquelle le plateau 34 est plus proche de la deuxième bobine 39 et la première denture 18 est dégagée de la deuxième denture 32.

Ainsi, lorsque la navette 30 est dans sa première position, celle-ci est liée en rotation à l'arbre 15 via la première denture 18 et la deuxième denture 32. La navette 30 étant bloquée en rotation relativement au carter 11 de manière permanente, la rotation de l'arbre 15 relativement au carter 11 est bloquée. Lorsque la navette 30 est dans sa deuxième position, l'arbre 15 est libre en rotation autour de l'axe longitudinal Oy relativement au carter 11. Les polarités et dimensions respectives de l'aimant permanent 40 et de l'anneau 34.1 en ferrite sont telles que, sous l'effet de l'aimant permanent 40, la navette 30 est maintenue en sa première position par un premier effort magnétique Fm1. De la même façon, sous l'effet de l'aimant permanent 40, la navette 30 est maintenue en sa deuxième position en l'absence d'alimentation de la première bobine 38 et de la deuxième bobine 39 par un deuxième effort magnétique Fm2.

En fonctionnement, lorsqu'un ordre de freinage est donné par le pilote de l'aéronef, l'unité électronique de contrôle de freinage alimente la bobine supérieure 38 et la bobine inférieure 39 pour qu'elles exercent un premier effort magnétique Fb1 sur l'anneau 34.1 suffisant pour surmonter le premier effort magnétique Fm1 et déplacer la navette 30 vers sa deuxième position (figure 2). Lorsque l'unité électronique de contrôle de freinage coupe l'alimentation de la bobine supérieure 38 et la bobine inférieure 39, la navette 30 est maintenue en sa deuxième position (figure 4) sous l'effet de l'aimant permanent 40, dont les lignes de champ bouclent à travers l'anneau 34.1, le carter 11 et la deuxième aile 43 du support 41. L'unité électronique de contrôle de freinage peut commander alors l'alimentation du moteur 12 de manière à appliquer un effort de presse sur la pile de disques 9, selon des modalités connues en elles-mêmes, pour pouvoir stopper le roulage de l'aéronef. Une fois l'aéronef arrêté à sa position de parking, l'unité électronique de contrôle de freinage commande le moteur 12 pour appliquer un effort de presse de maintien en position de l'aéronef. L'unité électronique de contrôle de freinage alimente alors la bobine supérieure 38 et la bobine inférieure 39 pour qu'elles exercent un deuxième effort magnétique Fb2 sur l'anneau 34.1 suffisant pour ramener la navette 30 vers sa première position (figure 4). Lorsque l'unité électronique de contrôle de freinage coupe l'alimentation de la bobine supérieure 38 et la bobine inférieure 39, la navette 30 est maintenue en sa première position (figure 2) sous l'effet de l'aimant permanent 40, dont les lignes de champ bouclent à travers l'anneau 34.1, le couvercle 44 et la première aile 42 du support 41. Dans cette première position, l'arbre 15 est bloqué en rotation et l'effort appliqué par le poussoir 6 est maintenu. Après une temporisation adaptée, l'unité de contrôle de freinage coupe l'alimentation du moteur 12 et le sous-ensemble moteur 60 permet l'application d'un effort de presse de maintien en position de l'aéronef (effort de parking) sans consommer d'énergie.

On obtient ainsi un actionneur de freinage à consommation électrique réduite.

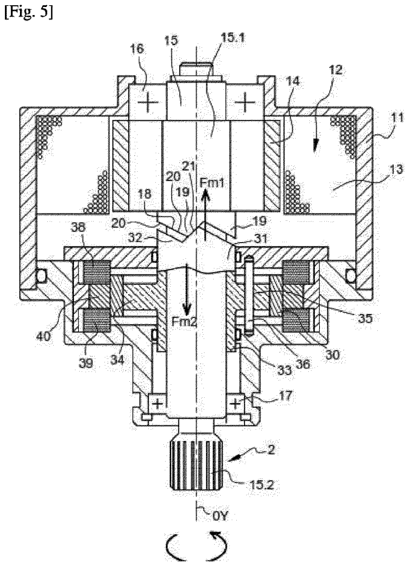

Lorsqu'un effort antagoniste supérieur à l'effort de freinage est appliqué par la pile de disques 9 sur le poussoir 6, par exemple lors des phénomènes de dilatation/contraction thermique du frein après le freinage, cet effort antagoniste supérieur à l'effort de freinage engendre un couple antagoniste sur l'arbre 15 via la chaîne cinématique reliant le poussoir 6 et l'arbre 15 (figure 5). Lorsque le couple antagoniste dépasse une valeur seuil prédéterminée, l'effort appliqué par la première denture 18 sur la deuxième denture 32 est suffisant pour surmonter le premier effort magnétique Fm1 et ainsi repousser la navette 30 (figure 5), autorisant une rotation de l'arbre 15 relativement au carter 11 ce qui agit comme un limiteur du couple appliqué sur le sous-ensemble moteur 60. Le couple antagoniste décroit au fur et à mesure de la rotation de l'arbre 15. En deçà d'un seuil, le couple antagoniste ne va plus être suffisant pour surmonter le premier effort magnétique Fm1 et la navette 30 va retrouver sa première position. Ce réengagement correspond au freinage de parc pour l'avion.

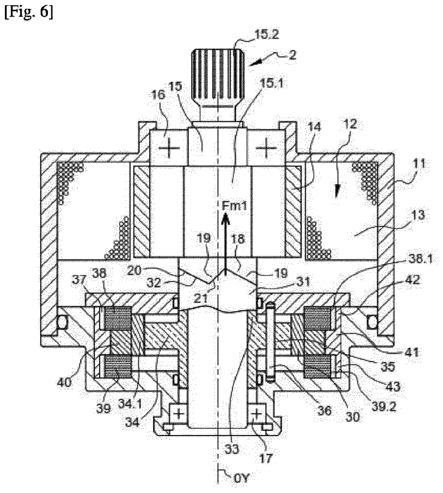

Selon un deuxième mode de réalisation représenté en figure 6, le moteur électrique 12 est implanté dans le carter 11 entre la navette 30 et la sortie 2 de l'actionneur 1.

Bien entendu, l'invention n'est pas limitée aux modes de réalisation décrits mais englobe toute variante entrant dans le champ de l'invention telle que définie par les revendications.

En particulier,
- bien qu'ici la première denture et la deuxième denture comprennent trois dents triangulaires, l'invention s'applique également à d'autres types de dentures comme par exemple des dentures à une, deux, quatre dents ou plus. Le profil des dentures peut également être différent comme par exemple une denture hélicoïdale, en dents de scie, ou tout autre profil comprenant au moins une face qui est comprise dans un plan sécant avec l'axe longitudinal, et dont le premier angle entre le premier plan et l'axe longitudinal est compris entre cinq et quatre-vingt-cinq degrés ;
- bien qu'ici la navette comprenne une portion centrale en bronze et un anneau en matériau ferromagnétique, l'invention s'applique également à d'autres types de matériau pour la navette comme par exemple une navette intégralement en matériau ferromagnétique ou dont la partie centrale serait en acier inoxydable amagnétique ;
- bien qu'ici l'actionneur comprenne deux bobines, l'invention s'applique également à d'autres types de mécanismes de sélection pour faire passer la navette de sa première position à sa deuxième position comme par exemple une unique bobine, plus de deux bobines, une fourchette agissant mécaniquement sur la navette ou un poussoir ;
- bien qu'ici l'actionneur comprenne un aimant permanent agissant sur une portion ferromagnétique de la navette, l'invention s'applique également à d'autres types de dispositifs de maintien de la navette en sa première position comme par exemple un ressort ou un empilement de rondelles élastiques ;
- bien qu'ici l'actionneur comprenne un guide solidaire du carter sur lequel coulisse la navette, l'invention s'applique également à d'autres types dispositif de blocage permanent de la rotation de la navette relativement au carter comme par exemple une navette pourvue de cannelures coopérant avec des cannelures homologues du carter ;
- bien qu'ici l'actionneur mette en rotation l'écrou, l'invention s'applique également à un actionneur mettant en rotation un autre élément mobile de l'ensemble vis-écrou, comme par exemple la vis ;
- bien qu'ici l'actionneur comprenne un support en matériau ferromagnétique, l'invention s'applique également à un actionneur dépourvu d'un tel support, la simple disposition des bobines et de l'aimant permanent permettant le maintien de deux états stables du plateau, à savoir un premier état dans lequel le plateau est dans sa première position et un deuxième état dans lequel le plateau est dans sa deuxième position ;
- bien qu'ici le guide soit en acier, l'invention s'applique également à un guide réalisé en d'autres matières telles que le bronze ou d'autres alliages nickel-cuivre-étain.

## Revendications

1. Sous ensemble moteur (60) pour actionneur (1) électromécanique de freinage d'une roue (10) d'un aéronef, le sous-ensemble moteur (60) comportant un carter (11), un arbre (15) monté dans le carter (11) pour pivoter autour d'un axe longitudinal (Oy) de l'arbre (15) et un moteur électrique (12) monté dans le carter et relié à une première extrémité (15.1) de l'arbre (15) pour l'entrainer en rotation, l'arbre (15) ayant une deuxième extrémité (15.2) agencée pour être fonctionnellement reliée à un élément mobile d'un ensemble vis/écrou (4, 7) pour exercer un effort sur une pile de disques (9) de freinage de la roue (10), l'arbre (15) comprenant une première denture (18) et le sous-ensemble moteur (60) comprenant une navette (30) montée à coulissement relativement au carter (11) et pourvue d'une deuxième denture (32) pour coopérer avec la première denture (18), le sous-ensemble moteur (60) comportant un mécanisme de sélection (34, 38, 39, 40, 41, 44) pour sélectivement déplacer la navette (30) entre une première position dans laquelle la première denture (18) est engagée avec la deuxième denture (32) et une deuxième position dans laquelle la première denture (18) est dégagée de la deuxième denture (32), **caractérisé en ce que** le sous-ensemble moteur (60) comporte un dispositif de maintien (40) pour maintenir la navette (30) dans sa première position et un dispositif de blocage (35, 36) permanent de la rotation de la navette (30) relativement au carter (11).

2. Sous ensemble moteur (60) pour actionneur (1) selon la revendication 1, dans lequel la navette (30) est montée sur l'arbre (15) pour réaliser une liaison pivot glissant relativement à l'arbre (15).

3. Sous ensemble moteur (60) pour actionneur (1) selon la revendication 2, dans lequel la liaison pivot glissant comprend une première portion centrale (33) qui s'étend autour d'une portion lisse de l'arbre (15).

4. Sous ensemble moteur (60) pour actionneur (1) selon la revendication 1 ou 2, dans lequel la navette (30) est montée pour réaliser une liaison glissière relativement au carter (11).

5. Sous ensemble moteur (60) pour actionneur (1) selon l'une quelconque des revendications précédentes, dans lequel le mécanisme de sélection (34, 38, 39, 40, 41) comprend une bobine (38,39).

6. Sous ensemble moteur (60) pour actionneur (1) selon l'une quelconque des revendications précédentes, dans lequel le dispositif de blocage (35, 36) permanent de la rotation de la navette (30) relativement au carter (11) comprend au moins un guide (36) solidaire du carter (11) et sur lequel la navette (30) est guidée à coulissement selon une direction sensiblement parallèle à l'axe longitudinal (Oy).

7. Sous ensemble moteur (60) pour actionneur (1) selon l'une quelconque des revendications précédentes, dans lequel la navette (30) comprend une première portion (33) en matériau non ferromagnétique et une deuxième portion (34.1) en un matériau ferromagnétique.

8. Sous ensemble moteur (60) pour actionneur (1) selon l'une quelconque des revendications précédentes, dans lequel la navette (30) est implantée dans le carter (11) entre le moteur électrique (12) et une sortie (2) de l'actionneur (1).

9. Sous ensemble moteur (60) pour actionneur (1) selon l'une quelconque des revendications précédentes, comprenant également un dispositif de maintien (40) pour maintenir la navette (30) dans sa deuxième position.

10. Sous ensemble moteur (60) pour actionneur (1) selon l'une quelconque des revendications précédentes, dans lequel le dispositif de maintien (40) pour maintenir la navette dans sa première position comprend un aimant permanent (40).

11. Sous ensemble moteur (60) pour actionneur (1) selon la revendication 9, dans lequel le dispositif de maintien (40) pour maintenir la navette dans sa deuxième position comprend un aimant permanent (40).

12. Sous ensemble moteur (60) pour actionneur (1) selon l'une quelconque des revendications précédentes, dans lequel la première denture (18) et/ou la deuxième denture (32) comprend une face comprise dans un premier plan sécant avec l'axe longitudinal (Oy), le premier angle entre le premier plan et l'axe longitudinal (Oy) étant compris entre cinq et quatre-vingt-cinq degrés.

13. Sous ensemble moteur (60) pour actionneur (1) selon l'une quelconque des revendications précédentes, dans lequel le moteur électrique (12) est implanté dans le carter (11) entre la navette (30) et la sortie (2) de l'actionneur (1).

14. Actionneur (1) de freinage comprenant un sous ensemble moteur (60) selon l'une quelconque des revendications précédentes.

15. Système de freinage pour roue (10) d'aéronef, comprenant une pile de disques (9) dont des disques rotors solidaires en rotation de la roue et des disques stators solidaires en rotation d'un essieu sur lequel la roue (10) est montée pour tourner, et un actionneur (1) selon la revendication 14 pour exercer un effort de presse sur la pile de disques (9).

16. Aéronef comprenant au moins une roue (10) pourvue d'un système de freinage selon la revendication 15.

## Patentansprüche

1. Motorunterbaugruppe (60) für einen elektromechanischen Bremsaktor (1) eines Rades (10) eines Luftfahrzeugs, wobei die Motorunterbaugruppe (60) enthält: ein Gehäuse (11), eine in dem Gehäuse (11) um eine Längsachse (Oy) der Welle (15) schenkbar gelagerte Welle (15) und einen Elektromotor (12), der in dem Gehäuse montiert und mit einem ersten Ende (15.1) der Welle (15) verbunden ist, um diese in Rotation zu versetzen, wobei die Welle (15) ein zweites Ende (15.2) aufweist, das derart angeordnet ist, dass es mit einem beweglichen Element einer Schrauben/Mutter-Einheit (4, 7) in Wirkverbindung steht, um eine Kraft auf einen Bremsscheibenstapel (9) des Rades (10) auszuüben, wobei die Welle (15) eine erste Verzahnung (18) umfasst und die Motorunterbaugruppe (60) einen Bewegkörper (30) umfasst, der relativ zu dem Gehäuse (11) verschiebbar montiert ist und mit einer zweiten Verzahnung (32) versehen ist, die mit der ersten Verzahnung (18) zusammenwirkt, wobei die Motorunterbaugruppe (60) einen Auswahlmechanismus (34, 38, 39, 40, 41, 44) enthält, um den Bewegkörper (30) selektiv zwischen einer ersten Position, in welcher die erste Verzahnung (18) mit der zweiten Verzahnung (32) in Eingriff steht, und einer zweiten Position, in welcher die erste Verzahnung (18) von der zweiten Verzahnung (32) gelöst ist, hin- und herzubewegen, **dadurch gekennzeichnet, dass** die Motorunterbaugruppe (60) eine Haltevorrichtung (40) zum Halten des Bewegkörpers (30) in seiner ersten Position und eine Permanent-Blockiervorrichtung (35, 36) zur Drehblockierung des Bewegkörpers (30) relativ zu dem Gehäuse (11) enthält.

2. Motorunterbaugruppe (60) für einen Aktor (1) nach Anspruch 1, wobei der Bewegkörper (30) derart auf der Welle (15) montiert ist, dass eine relativ zur Welle (15) gleitende Schwenkverbindung hergestellt wird.

3. Motorunterbaugruppe (60) für einen Aktor (1) nach Anspruch 2, wobei die gleitende Schwenkverbindung einen ersten Zentralbereich (33) umfasst, der sich um einen glatten Bereich der Welle (15) herum erstreckt.

4. Motorunterbaugruppe (60) für einen Aktor (1) nach Anspruch 1 oder 2, wobei der Bewegkörper (30) derart montiert ist, dass eine Gleitverbindung relativ zu dem Gehäuse (11) hergestellt wird.

5. Motorunterbaugruppe (60) für einen Aktor (1) nach einem der vorhergehenden Ansprüche, wobei der Auswahlmechanismus (34, 38, 39, 40, 41) eine Spule (38, 39) umfasst.

6. Motorunterbaugruppe (60) für einen Aktor (1) nach einem der vorhergehenden Ansprüche, wobei die Permanent-Blockiervorrichtung (35, 36) der Rotation des Bewegkörpers (30) relativ zu dem Gehäuse (11) zumindest eine Führung (36) umfasst, die fest mit dem Gehäuse (11) verbunden ist und auf welcher der Bewegkörper (30) in einer im Wesentlichen parallel zur Längsachse (Oy) verlaufenden Richtung gleitend geführt wird.

7. Motorunterbaugruppe (60) für einen Aktor (1) nach einem der vorhergehenden Ansprüche, wobei der Bewegkörper (30) einen ersten Bereich (33) aus nicht-ferromagnetischem Material und einen zweiten Bereich (34.1) aus ferromagnetischem Material umfasst.

8. Motorunterbaugruppe (60) für einen Aktor (1) nach einem der vorhergehenden Ansprüche, wobei der Bewegkörper (30) zwischen dem Elektromotor (12) und einem Ausgang (2) des Aktors (1) in dem Gehäuse (11) eingesetzt ist.

9. Motorunterbaugruppe (60) für einen Aktor (1) nach einem der vorhergehenden Ansprüche, welche ferner eine Haltevorrichtung (40) umfasst, die den Bewegkörper (30) in seiner zweiten Position hält.

10. Motorunterbaugruppe (60) für einen Aktor (1) nach einem der vorhergehenden Ansprüche, wobei die Haltevorrichtung (40) zum Halten des Bewegkörpers in seiner ersten Position einen Permanentmagneten (40) umfasst.

11. Motorunterbaugruppe (60) für einen Aktor (1) nach Anspruch 9, wobei die Haltevorrichtung (40) zum Halten des Bewegkörpers in seiner zweiten Position einen Permanentmagneten (40) umfasst.

12. Motorunterbaugruppe (60) für einen Aktor (1) nach einem der vorhergehenden Ansprüche, wobei die erste Verzahnung (18) und/oder die zweite Verzahnung (32) eine Fläche umfasst, welche in einer ersten Schnittebene mit der Längsachse (Oy) liegt, wobei der erste Winkel zwischen der ersten Ebene und der Längsachse (Oy) in einem Bereich zwischen 5 und 85 Grad liegt.

13. Motorunterbaugruppe (60) für einen Aktor (1) nach einem der vorhergehenden Ansprüche, wobei der Elektromotor (12) in dem Gehäuse (11) zwischen dem Bewegkörper (30) und dem Ausgang (2) des Aktors (1) eingesetzt ist.

14. Bremsaktor (1), welcher eine Motorunterbaugruppe (60) nach einem der vorhergehenden Ansprüche umfasst.

15. Bremssystem für ein Luftfahrzeugrad (10), welches umfasst: einen Scheibenstapel (9) mit Rotorscheiben, die drehfest mit dem Rad verbunden sind, und mit Statorscheiben, die drehfest mit einer Achse verbunden sind, auf welcher das Rad (10) drehbar montiert ist, sowie einen Aktor (1) nach Anspruch 14 zur Ausübung einer Presskraft, auf den Scheibenstapel (9).

16. Luftfahrzeug, welches zumindest ein Rad (10) mit einem Bremssystem nach Anspruch 15 umfasst.

## Claims

1. A motor sub-assembly (60) for an electromechanical brake actuator (1) of an aircraft wheel (10), the motor sub-assembly (60) comprising a casing (11), a shaft (15) mounted in the casing (11) to rotate about a longitudinal axis (Oy) of the shaft (15), and an electric motor (12) mounted in the casing and connected to a first end (15.1) of the shaft (15) in order to drive it in rotation, the shaft (15) having a second end (15.2) arranged to be functionally connected to a movable element of a screw-and-nut assembly (4, 7) in order to exert a force on a stack of disks (9) for braking the wheel (10), the shaft (15) having a first set of teeth (18) and the motor sub-assembly (60) having a shuttle (30) mounted to slide relative to the casing (11) and provided with a second set of teeth (32) for co-operating with the first set of teeth (18), and the motor sub-assembly (60) including a selector mechanism (34, 38, 39, 40, 41, 44) for moving the shuttle (30) selectively between a first position in which the first set of teeth (18) is engaged with the second set of teeth (32) and a second position in which the first set of teeth (18) is disengaged from the second set of teeth (32), **characterized in that** the motor sub-assembly (60) includes a holder device (40) for holding the shuttle (30) in its first position and a locking device (35, 36) for continuously preventing the shuttle (30) from rotating relative to the casing (11).

2. An actuator motor sub-assembly (60) according to claim 1, wherein the shuttle (30) is mounted on the shaft (15) to provide a sliding and pivoting connection relative to the shaft (15).

3. An actuator motor sub-assembly (60) according to claim 2, wherein the sliding and pivoting connection includes a central first portion (33) that extends around a smooth portion of the shaft (15).

4. An actuator motor sub-assembly (60) according to claim 1 or claim 2, wherein the shuttle (30) is mounted to provide a slideway connection relative to the casing (11) .

5. An actuator motor sub-assembly (60) according to any preceding claim, wherein the selector mechanism (34, 38, 39, 40, 41) comprises a coil (38, 39).

6. An actuator motor sub-assembly (60) according to any preceding claim, wherein the locking device (35, 36) for continuously preventing the shuttle (30) from rotating relative to the casing (11) comprises at least one guide (36) secured to the casing (11) and on which the shuttle (30) is guided to slide along a direction substantially parallel to the longitudinal axis (Oy).

7. An actuator motor sub-assembly (60) according to any preceding claim, wherein the shuttle (30) comprises a first portion (33) made of non-ferromagnetic material and a second portion (34.1) made of ferromagnetic material.

8. An actuator motor sub-assembly (60) according to any preceding claim, wherein the shuttle (30) is located in the casing (11) between the electric motor (12) and an output (2) of the actuator (1).

9. An actuator motor sub-assembly (60) according to any preceding claim, further comprising a holder device (40) for holding the shuttle (30) in its second position.

10. An actuator motor sub-assembly (60) according to any preceding claim, wherein the holder device (40) for holding the shuttle in its first position comprises a permanent magnet (40).

11. An actuator motor sub-assembly (60) according to claim 9, wherein the holder device (40) for holding the shuttle in its second position comprises a permanent magnet (40).

12. An actuator motor sub-assembly (60) according to any preceding claim, wherein the first set of teeth (18) and/or the second set of teeth (32) includes a face lying in a first plane intersecting the longitudinal axis (Oy), the first angle between the first plane and the longitudinal axis (Oy) lying in the range 5° to 85°.

13. An actuator motor sub-assembly (60) according to any preceding claim, wherein the electric motor (12) is located in the casing (11) between the shuttle (30) and the output (2) of the actuator (1).

14. A brake actuator (1) including a motor sub-assembly (60) according to any preceding claim.

15. A braking system for an aircraft wheel (10), the braking system comprising a stack of disks (9) having rotor disks constrained in rotation with the wheel and stator disks constrained in rotation with an axle on which the wheel (10) is rotatably mounted, and an actuator (1) according to claim 14, for exerting a compression force on the stack of disks (9).

16. An aircraft including at least one wheel (10) provided with a braking system according to claim 15.
